# EUROPEAN PATENT SPECIFICATION

(11) **EP 4 167 397 B1**
(45) Date of publication and mention of the grant of the patent: **26.08.2026**
(21) Application number: 21837420.5
(22) Date of filing: 03.06.2021
(51) Int. Cl.: H04Q 1/02, H02G 3/08, H02G 3/18, H04B 3/54, H01R 27/02, H01R 13/66, H01R 25/00, H02G 3/14, H01R 13/447

(54) **POWER SOURCE EXTENSION PLUG BOARD AND SOCKET**
STROMQUELLENERWEITERUNGSSTECKPLATTE UND BUCHSE
CARTE ENFICHABLE D'EXTENSION DE SOURCE D'ALIMENTATION ET PRISE

(30) Priority: 10.07.2020 CN 202010663639
(43) Date of publication of application: 19.04.2023
(73) Proprietor: Huawei Technologies Co., Ltd., Longgang District, Shenzhen, Guangdong 518129 (CN)
(72) Inventor: FANG, Hongbin, Shenzhen, Guangdong 518129 (CN); PI, Yuan, Shenzhen, Guangdong 518129 (CN)
(74) Representative: Isarpatent
(86) International application number: PCT/CN2021/098150
(87) International publication number: WO 2022/007558

(56) References cited:
- EP-A1- 2 928 113
- WO-A2-02/11266
- CN-A- 102 185 637
- CN-A- 102 185 637
- CN-A- 110 021 860
- CN-A- 110 896 326
- CN-U- 208 143 220
- CN-U- 209 786 342
- CN-U- 209 786 342
- CN-U- 209 805 835
- CN-U- 210 579 010
- CN-U- 210 579 010

## Description

### TECHNICAL FIELD

This disclosure generally relates to the field of communication technologies, and the invention in particular relates to a power supply expansion plugboard and a socket.

### BACKGROUND

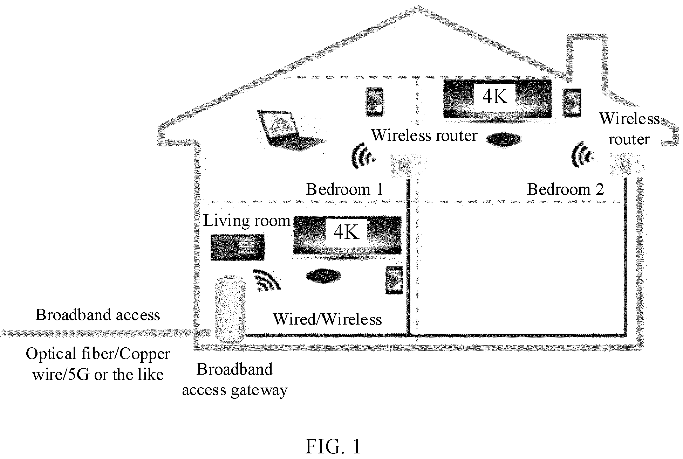

With the increasing popularity of people's demand for broadband networks, broadband networks are installed in most households. As shown in FIG. 1, after a family implements broadband access (for example, through an optical fiber, a copper wire, or 5G), to implement that all terminal devices (such as, a smartphone, a laptop, a smart television, and a tablet) in each room of the family can be connected to a network to perform net surfing, a device, for example, a wireless router or a power line communication modem is usually mounted in addition to a broadband access gateway device, to expand a coverage area of a Wi-Fi signal. The wireless router or the gateway device is usually mounted on a floor or furniture in the family, and a power adapter of the wireless router or the gateway device is plugged into a socket on a wall. An optical fiber or a network cable is connected to the socket on the wall or is connected to another nearby device that needs to be connected by using a cable.

An existing gateway device, router device, or power line communication modem each needs to obtain power from the socket on the wall, and therefore, occupies limited sockets in a room.

CN 210579010 U discloses a panel type device with a pluggable power line. The panel type device comprises a device body and a power supply assembly arranged on the device body. The device body comprises a bottomshell, a first circuit board, a second circuit board and an upper cover. A cavity capable of accommodating the first circuit board and the second circuit board is formed in the bottom shell. The power supply assembly and the device body are integrally arranged, the power supply assembly comprises a power supply circuit board and an AC input socket connected with the power supply circuit board. The part, corresponding to the power supply assembly, of the bottom shell is of a step-shaped structure, and a power supply opening is formed in the step-shaped structure. According to the device, an integrated design of the power supply and the bottom box is adopted, and the design of the socket or the AC power supply plug is adopted in such a manner that local (adjacent) socket power taking or remote AC power supply power taking of the device can be realized, and potential safety hazards of manual power connection can be effectively avoided, and the safety and reliability of the use of the device can be ensured.

CN 208 143 220 U generally discloses a wall-embedded modem device and a home network system. It discloses that current power communication modem equipment used in the market still uses external plug-in access, which takes up space and affects the use of power sockets. The document proposes a solution wherein a modem device is embedded in the wall and connected to the household power lines. The device includes a control panel, a cover, a modem, a power socket, a network interface, and a network control switch. The cover has openings for the modem, power socket, network interface, and network control switch, and it also includes a heat dissipation net. The document further discusses the advantages of using power line transmission for home network signals, reducing complexity in internal wiring, and saving space for network expansion. A home network system consisting of multiple wall-embedded modem devices is also described, with network signal transmission being carried out through power line carrier.

CN 110 021 860 A generally discloses an intelligent wall socket. The socket is aimed to solve the limitations of traditional sockets and existing smart sockets by providing a smart wall socket that has multiple functions, can be embedded in the wall, is safe to use, and can collect and transmit data to the mobile terminal and cloud server. The smart wall socket includes a socket body with live and ground wire and neutral wire connection holes, two-hole and three-hole jacks for connecting external electrical equipment, a motherboard with various modules including a microprocessor, wireless network module, control module, power supply module, power conversion module, and sensor interface. The pluggable sensor modules can collect temperature, humidity, and light data and are customizable according to user needs. The smart wall socket allows for networking, data communication, and remote control through the mobile terminal.

### SUMMARY

The object of the present invention is to provide a power supply expansion plugboard to resolve the problems that a network device placed separately does not look good and a socket is occupied.

This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect, the invenion provides a power supply expansion plugboard, including: a circuit assembly, an AC/DC power supply conversion module, a network motherboard, an assembly structure, and a cover plate. The circuit assembly is connected to a power line and is configured to provide a power supply externally. The AC/DC power supply conversion module is connected to the power line and is configured to provide a direct current power supply for the network motherboard. The network motherboard is disposed on one side of the assembly structure, and the circuit assembly and the AC/DC power supply conversion module are disposed on the other side of the assembly structure. The assembly structure is configured to assemble the circuit assembly and the AC/DC power supply conversion module inside a bottom box, and at least a part of the network motherboard is disposed outside the bottom box. The cover plate is configured to cover the assembly structure, and jacks are disposed at positions that are on the cover plate and that correspond to the circuit assembly.

In another possible implementation, the network motherboard is further configured to provide a wired network interface externally, and an opening is disposed at a position that is on the cover plate and that corresponds to the network interface.

In another possible implementation, the network motherboard includes a radio frequency module and an internal antenna, and the internal antenna is connected to the radio frequency module. The network motherboard is configured to provide a wireless network signal externally.

In another possible implementation, the network motherboard includes a radio frequency module and an external antenna, the radio frequency module is connected to the external antenna, and the external antenna is disposed on the cover plate. The network motherboard is configured to provide a wireless network signal externally. In another possible implementation, the network motherboard further includes a network configuration interface for configuring a network parameter.

In another possible implementation, the network motherboard further includes a network control switch configured to enable or disable a network, and a button is disposed at a position, corresponding to the network control switch, on the cover plate, and is configured to trigger the network control switch.

In another possible implementation, the network motherboard uses a power line carrier technology to receive a transmitted network signal and send a network signal through a power line.

In another possible implementation, the network motherboard and the cover plate are L-shaped.

In another possible implementation, the assembly structure is an assembly panel, and the assembly panel includes a connecting plate at least a part of which covers an opening of the bottom box and a mounting plate extending outside the bottom box. The network motherboard is mounted on one side that is of the mounting plate and that faces the cover plate. The circuit assembly and the AC/DC power supply conversion module are mounted on one side that is of the connecting plate and that is away from the cover plate.

In another possible implementation, a first avoidance hole and a second avoidance hole are disposed on the connecting plate. A network cable is communicatively connected to the network motherboard through the first avoidance hole, and a power line of the AC/DC power supply conversion module is electrically connected to the network motherboard through the second avoidance hole.

In another possible implementation, several extension bodies protruding and extending toward the cover plate are disposed on one side that is of the assembly structure and that faces the cover plate, and are configured to wrap the network cable/power line.

In another possible implementation, the extension bodies include a first extension column and a second extension column that are disposed at intervals. A gap between the first extension column and the second extension column is greater than or equal to a diameter of the network cable/power line, and the network cable/power line passes through the gap between the first extension column and the second extension column. In another possible implementation, the cover plate includes a panel and an upper baffle plate, a lower baffle plate, a left baffle plate, and a right baffle plate that are circumferentially disposed around the panel. Several heat emission holes are disposed on the lower baffle plate and/or the left baffle plate and/or the right baffle plate.

According to a second aspect, the invention further provides a socket, including the foregoing power supply expansion plugboard and bottom box.

Based on the power supply expansion plugboard provided in this embodiment of this application, the network motherboard are assembled outside the bottom box through the assembly structure, and the network motherboard directly obtains power from the power line inside the bottom box through the AC/DC power supply conversion module. In this way, a network function is expanded while a basic power obtaining function of an existing socket is reserved, and a problem that an existing network device occupies a socket is resolved.

### BRIEF DESCRIPTION OF DRAWINGS

The following briefly describes the accompanying drawings for describing embodiments or the conventional technology.
FIG. 1 is a diagram of an application scenario of a network device;
FIG. 2 is a schematic diagram of a structure of a power supply expansion plugboard according to an embodiment of this application; and
FIG. 3 is an exploded view of a power supply expansion plugboard according to an embodiment of this application.

### DESCRIPTION OF EMBODIMENTS

The following describes the technical solutions in embodiments of this application with reference to the accompanying drawings in embodiments of this application.

In the description of this application, orientations or positional relationships indicated by terms such as "center", "above", "under", "front", "back", "left", "right", "vertical", "horizontal", "top", "bottom", "inside", and "outside" are orientations or positional relationships shown based on the accompanying drawings. The orientations or the positional relationships are only intended to facilitate and simplify the description of this application, but are not intended to indicate or imply that an apparatus or a component needs to have a specific orientation and be constructed and operated in a specific orientation. Therefore, the terms cannot be construed as a limitation on this application.

In the description of this application, it should be noted that, unless otherwise specified and defined, terms such as "mount", "connected", and "connect" should be broadly understood, for example, may be understood as a fastened connection, a detachable connection, a pressing connection, or an integral connection. Persons of ordinary skill in the art may understand specific meanings of the foregoing terms in this application based on specific cases.

In a first technical solution, a broadband access device, a wireless router, and the like are made into a small box (a wall-mounted device) that includes a power supply, and the entire box is directly plugged into a power socket, and then is connected to a needed cable.

Although the foregoing technical solution resolves a problem that network devices such as a gateway device and a router are scattered, there is still a problem that the wall-mounted device protrudes from a wall surface, does not match an ambient environment, and is unsightly. Because a size of the wall-mounted device is large, remaining jacks on the socket cannot be used, and wall sockets are occupied. In addition, because the wall-mounted device protrudes from the wall surface, there is a great risk that the device may be knocked off when persons pass by; and if the wall-mounted device is connected to a cable (a network cable, or the like), the device may be pulled off because the cable is touched, and accordingly, a service may be interrupted, and the device may be damaged.

In a second technical solution, when a family has a wall-mounted or an externally-hung information box, a broadband access device, a wireless router, and the like may be mounted in the information box. There are power sockets and various optical fiber or cable interfaces in the information box.

The second technical solution is not universal. Because an information box is usually available only at an entrance or in an individual location, which involves mounting and cabling, it is difficult to mount an information box in another room. In addition, there is also a problem that Wi-Fi signals are weakened. Because most information boxes are wall-mounted and may be shielded by information box covers, the Wi-Fi signals are easily affected.

In a third technical solution, a broadband access device or a wireless router is made into an embedded structure and is directly mounted at a position where a socket or a power/multimedia socket is reserved on a home wall. An original socket cassette is removed, and a panel-type AP is mounted.

In the third technical solution, AC power sockets are reduced, and because the panel-type AP is mounted in a wall body it is difficult for device heat dissipation and cable/fiber cabling, and as an antenna performance, for example, Wi-Fi, is easily affected because an antenna is close to the wall body, a Wi-Fi signal is weakened.

An embodiment of this application provides a power supply expansion plugboard, including: a circuit assembly, an AC/DC power supply conversion module, a network motherboard, an assembly structure, and a cover plate. The circuit assembly is connected to a power line and is configured to provide a power supply externally. The AC/DC power supply conversion module is connected to the power line and is configured to provide a direct current power supply for the network motherboard. The network motherboard is disposed on one side of the assembly structure, and the circuit assembly and the AC/DC power supply conversion module are disposed on the other side of the assembly structure. The assembly structure is configured to assemble the circuit assembly and the AC/DC power supply conversion module inside a bottom box, and at least a part of the network motherboard is disposed outside the bottom box. The cover plate is configured to cover the assembly structure, and jacks are disposed at positions that are on the cover plate and that correspond to the circuit assembly. The network motherboard and the bottom box are assembled outside the bottom box through the assembly structure, and the network motherboard directly obtains power from the power line inside the bottom box through the AC/DC power supply conversion module. In this way, a network function is expanded while a basic power obtaining function of an existing socket is reserved, and a problem that an existing network device occupies a socket is resolved.

### Embodiment 1

The following describes in detail a structure of a power supply expansion plugboard provided in this embodiment of this application with reference to the accompanying drawings.

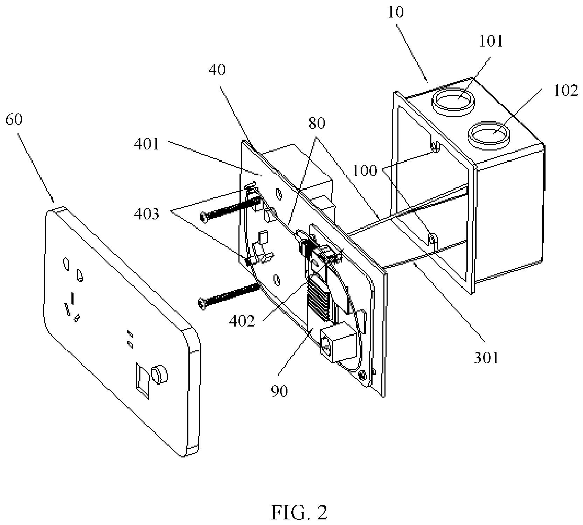

FIG. 2 is a diagram of a structure of the power supply expansion plugboard provided in this embodiment of this application. As shown in FIG. 2, the power supply expansion plugboard includes a circuit assembly 20, an AC/DC power supply conversion module 30, an assembly panel 40, a network motherboard 90, and a cover plate 60. Both the circuit assembly 20 and the AC/DC power supply conversion module 30 are accommodated in a bottom box 10. The network motherboard 90 is assembled on a side of an opening of the bottom box 10 by the assembly panel 40. A power line is separately electrically connected to the circuit assembly 20 and the AC/DC power supply conversion module 30. The AC/DC power supply conversion module 30 is electrically connected to the network motherboard 90. The network motherboard 90 is communicatively connected to a home-entry network cable 80. The cover plate 60 covers the network motherboard 90 and the opening of the bottom box 10, so that the bottom box 10 and the network motherboard 90 form a whole body in appearance, and the appearance is more beautiful. In addition, the network motherboard obtains power from the bottom box and does not occupy a jack of a socket, which does not affect use of the socket.

It should be explained herein that the bottom box is a bottom box used for an original socket, concretely an 86-type box. That is, a size or a structure of the bottom box does not need to be changed for the power supply expansion plugboard in this application. The power line is connected to a power supply network to supply power to the circuit assembly and the network motherboard. For example, the power line may be connected to a mains power supply network or another power supply network.

To not occupy the jack of the socket, the network motherboard 90 is electrically connected to the power line of the bottom box through the AC/DC power supply conversion module 30 to obtain power, and the AC/DC power supply conversion module 30 converts an alternating current provided by the power line into a direct current applicable to the network motherboard. For example, the AC/DC power supply conversion module 30 converts an alternating current of 220 V of the mains into a direct current of 12 V applicable to the network motherboard 90. Certainly, the conversion may also be implemented between other voltages which can be selected according to a requirement without an essential difference.

Specifically, the AC/DC power supply conversion module includes a housing and an AC/DC conversion circuit that is accommodated in the housing. One end of the AC/DC conversion circuit is electrically connected to the power line, and the other end of the AC/DC conversion circuit is electrically connected to the network motherboard 90. The AC/DC conversion circuit converts an alternating current input by the power line into a direct current output applicable to the network motherboard 90, to provide a working power supply for the network motherboard 90. The circuit assembly 20 includes a conductive contact plate, and plug holes are disposed at positions that are on a connecting plate 401 and that correspond to the conductive contact plate. The plug holes on the connecting plate 401 are aligned with plug holes on the cover plate 60, and a plug penetrates through the plug holes on the cover plate 60 and the plug holes on the connecting plate 401 to contact the conductive contact plate to obtain power.

The circuit assembly 20 and the AC/DC power supply conversion module 30 may be mounted in the bottom box by using a connector, or may be mounted on a back surface (a side that faces away from the cover plate) of the connecting plate. For example, the AC/DC power supply conversion module 30 and the circuit assembly 20 may be attached to the back surface of the connecting plate in a clamping, fastener fastening, or gluing manner.

The circuit assembly 20 and the AC/DC power supply conversion module 30 may be integrated into a module mounted in the bottom box or on the back surface of the connecting plate, thereby increasing efficiency of mounting the circuit assembly and the AC/DC power supply conversion module.

Alternatively, the circuit assembly 20 and the AC/DC power supply conversion module 30 may be disposed separately. The circuit assembly 20 and the AC/DC power supply conversion module 30 do not affect each other in mounting and fastening, and a mounting position of the AC/DC power supply conversion module 30 is more flexible.

Still refer to FIG. 2. The assembly panel 40 includes a connecting plate 401 a part of which covers an opening of the bottom box 10 and a mounting plate 402 extending outside the bottom box 10. The network motherboard 90 is mounted on a front surface (a surface facing the cover plate) of the mounting plate 402, and the cover plate 60 is disposed to completely cover the opening of the bottom box 10 and the assembly panel, so that the bottom box 10 and the network motherboard 90 form a whole body in appearance, and the appearance is more beautiful.

The cover plate 60, the bottom box 10, and the connecting plate 401 are fastened and connected by using fasteners. For example, connecting lugs 100 or threaded columns are disposed on the opening of the bottom box 10, and connection holes are disposed at positions that are on the connecting plate 401 and the cover plate 60 and that correspond to the connecting lug 100 or the threaded column. Screws 50 pass through the connection holes, the connecting lugs 100, or the threaded columns, to fasten and connect the cover plate 60, the connecting plate 401, and the bottom box 10.

Certainly, the cover plate 60, the bottom box 10, and the connecting plate 401 may alternatively be assembled and fastened in another manner. For example, the cover plate 60, the bottom box 10, and the connecting plate 401 are assembled and fastened in a clamping manner. The cover plate includes a panel and a baffle plate that extends from an edge of the panel to a side of the bottom box. A clamping hole is disposed on the baffle plate, and a clamping column that is adaptable to the clamping hole is disposed on each the assembly panel and the opening of the bottom box. The clamping column and the clamping hole are configured to clamp and fasten the cover plate, the assembly panel, and the bottom box.

The bottom box 10 in this embodiment of this application may be embedded in a wall, or may be disposed on a wall surface. The bottom box includes a bottom plate and four side plates surrounding four ends of the bottom plate.

When the bottom box 10 is embedded into the wall, the opening of the bottom box 10 is aligned with the wall surface or partially protrudes from the wall surface. The assembly panel 40 is a straight panel. A part of the assembly panel 40 is assembled and connected to the opening of the bottom box 10, and a part of the assembly panel 40 extends to a side (a left side, a right side, an upper side, or a lower side) of the opening of the bottom box. Correspondingly, the cover plate 60 is also a straight panel. After completely covering the opening of the bottom box 10, the cover plate 60 continues to extend to cover the assembly panel, so that an original socket expands a new network function area. A first cable routing aperture and a second cable routing aperture that penetrate through the bottom plate are disposed on the bottom plate of the bottom box 10. The first cable routing aperture and the second cable routing aperture are disposed independently of each other. The power line passes through the first cable routing aperture and is separately electrically connected to the circuit assembly and the AC/DC power supply conversion module, to supply power to the circuit assembly and the network motherboard. A home-entry network cable passes through the second cable routing aperture and is communicatively connected to the network motherboard, so that the network motherboard is connected to a local area network or a wide area network and is communicatively connected to an external device network. The first cable routing aperture and the second cable routing aperture are disposed to prevent interference between the power line and the home-entry network cable, to avoid affecting network signal transmission.

When the bottom box 10 is disposed on the wall surface, the assembly panel is an L-shaped bent panel, including a first bent part and a second bent part. The first bent part is assembled and connected to the opening of the bottom box, and the second bent part is attached to a side plate of the bottom box. The network motherboard is mounted on the second bent part, and the corresponding cover plate is also an L-shaped bent panel and is disposed to cover the opening of the bottom box and the network motherboard. The first cable routing aperture and the second cable routing aperture are disposed on a side plate that is of the bottom box and that is not attached to the second bent part. In this way, the network motherboard is attached to the side plate of the bottom box, does not need to expand and occupy the wall surface, and is more beautiful.

Certainly, when the bottom box 10 is disposed on the wall surface, the assembly panel 40 may alternatively be a straight panel. A part of the assembly panel 40 is assembled and connected to the opening of the bottom box 10, and a part of the assembly panel 40 extends to a side (the left side, the right side, the upper side, or the lower side) of the opening of the bottom box, and the corresponding cover plate 60 is also a straight panel. After completely covering the opening of the bottom box 10, the cover plate 60 continues to extend to cover the assembly panel. The first cable routing aperture 101 and the second cable routing aperture 102 are disposed on the side plate of the bottom box. That is, the power line and the home-entry network cable are exposed on the wall surface, which can break restraint of an original decoration on a position of the socket.

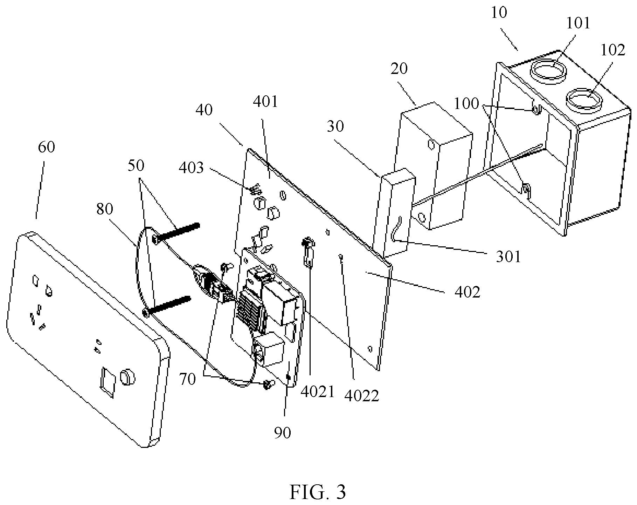

Refer to FIG. 3. An avoidance hole 4021 (namely, a first avoidance hole) and an avoidance hole 4022 (namely, a second avoidance hole) are disposed on the assembly panel 40. The network cable 80 passes through the avoidance hole 4021 and is communicatively connected to the network motherboard 90, and a power line 301 of the AC/DC power supply conversion module 30 passes through the avoidance hole 4022 and is electrically connected to the network motherboard 90.

The network motherboard 90 is assembled and connected to the mounting plate 402. For example, the network motherboard 90 is fastened and connected to the mounting plate by using fasteners, several connection holes are disposed at corresponding positions of the network motherboard 90 and the mounting plate 402, and screws 70 pass through the connection holes to fasten and connect the network motherboard 90 and the mounting plate 402.

Alternatively, the network motherboard may be clamped and fastened to the mounting plate. A clamping column is disposed on the back surface of the network motherboard, and a clamping hole that is applicable to the clamping column is disposed on the mounting plate. The clamping column is clamped into the clamping hole to fasten the network motherboard and the mounting plate in a clamping manner; or, the network motherboard may be cemented and fastened to the mounting plate. A glue is applied to the back surface of the network motherboard or a front surface of the mounting plate, and then the network motherboard and the mounting plate are cemented and fastened.

Several extension bodies 403 extending and protruding toward a cover plate 60 are disposed on the assembly panel 40, and the extension bodies 403 are disposed close to an edge of the assembly panel 40, to increase a length of winding of each circle of a network cable, without affecting the network motherboard and the jacks. The redundant network cable may be accommodated in a space formed by the cover plate and the assembly panel, to prevent the network cable from being exposed to the power supply expansion plugboard and affecting beauty and prevent the redundant network cable from tripping over a user.

Still refer to FIG. 2. The extension bodies 403 include a first extension column and a second extension column that are disposed at intervals. A gap between the first extension column and the second extension column is slightly greater than a diameter of the network cable, so that the network cable may pass through the gap, and the redundant network cable can pass through the gap formed between the first extension column and the second extension column and is accommodated in the space formed by the cover plate and the assembly panel. The first extension column and the second extension column are disposed, so that the network cable passing through the gap can separately come into contact with the first extension column and the second extension column to generate a large frictional force, to prevent the network cable from falling from the extension bodies.

In another implementation, several extension bodies may alternatively be several hooks. Hooked parts of the hooks disposed on an upper part of the assembly panel are bent upward, and hooked parts of the hooks disposed on a lower part of the assembly panel are bent downward. The network cable winding the hooks are shielded by the hooked parts from falling easily.

The cover plate 60 includes a panel and a baffle plate that extends from an edge of the panel to a side close to the assembly panel. A shape of the panel is the same as that of the assembly panel 40. A surface area of the panel is the same as or slightly greater than that of the assembly panel. A snap-fit groove is disposed on the baffle plate of the cover plate, and an end of the assembly panel may be pressed into the snap-fit groove to clamp and fasten the panel and the assembly panel. The cover plate is first clamped and fastened to the assembly panel to implement pre-mounting, and then the screws 50 are used to fasten the cover plate, the assembly panel, and the bottom box, to increase mounting efficiency.

To further increase mounting stability of the power supply expansion plugboard, a sucker or another connector is disposed on the back surface of the assembly panel and is connected to the wall.

In an example, the network motherboard includes a power line communication modem, and a power line is used as an information transmission medium by using a power line carrier technology to perform data transmission with an external communication network. In this case, the network motherboard is directly connected to the power line, and a network cable does not need to be laid through a wall hole. The second cable routing aperture does not need to be disposed on the bottom plate or the side plate of the corresponding bottom box, and a structure of the power supply expansion plugboard is simpler.

In another example, the network motherboard includes a network access port (a WAN port), and the home-entry network cable is communicatively connected to the network access port, so that the network motherboard is communicatively connected to an external communication network. The network motherboard further includes a wired network interface. An avoidance gap is disposed at a position that corresponds to the network interface and that is on the cover plate. Another network device (for example, a computer or a router) is communicatively connected to the wired network interface by using the network cable to access a local area network or a wide area network, to implement network communication. For example, the wired network interface may be a network cable interface, and the network device is plugged to the wired interface to implement network communication. The network cable may be an optical fiber or a twisted pair. This is not limited in this application.

In another example, a radio frequency module is further disposed on the network motherboard, and an internal antenna may be disposed on the network motherboard. The internal antenna is communicatively connected to the radio frequency module, and a through hole is disposed at a position that is on the cover plate and that corresponds to the internal antenna, to avoid affecting signal passing. Alternatively, an external antenna is disposed on the cover plate, and the external antenna is communicatively connected to the radio frequency module, to provide a wireless network signal externally, for example, a Wi-Fi signal.

In another example, the network motherboard further includes a network configuration port for configuring a network parameter, and a user sets a network parameter through the network configuration port, for example, an IP address, a network speed limit, or a quantity of connected network device. The network configuration port may be a wired port, for example, a network cable connection port or a USB port, or may be a wireless communication port. A communication terminal is wirelessly connected to the network configuration port to perform network parameter setting on a network.

In another example, the network motherboard further includes a network control switch configured to enable or disable a network, and a button is disposed at a position that is on the cover plate and that corresponds to the network control switch, and is configured to trigger the network control switch. Certainly, to facilitate a user to know a working status of the network motherboard, a working status indicator may be disposed on the network motherboard, and a window is disposed at a position that is on the cover plate and that corresponds to the working status indicator.

To add a heat emission function of the network motherboard, several heat emission holes are disposed on a left baffle plate and/or a right baffle plate and/or a lower baffle plate and/or an upper baffle plate of the cover plate.

An embodiment of this application further provides a socket. The socket includes the foregoing power supply expansion plugboard and bottom box. The power supply expansion plugboard and the bottom box are assembled to form the socket. For a specific structure of the power supply expansion plugboard, refer to the foregoing descriptions. Details are not described herein again. The socket formed after the power expansion plugboard and the bottom box are assembled expands a network connection function on the basis of reserving an original power socket function, so that a communication terminal (for example, a computer, a smartphone, or a smart wearable device with a network connection function) can access a communication network, and no other network device (for example, a gateway device, a router device, a power line communication modem, or another network connection device) needs to be disposed, to resolve the problems that the socket is occupied and the appearance is affected due to separate placement.

It should be explained herein that the bottom box does not need a structure change, and a conventional socket bottom box, for example, an 86-type box, can be used.

### Embodiment 2

Embodiment 2 is different from Embodiment 1 in that the assembly panel includes a mounting plate and a connecting frame extending from an end of the mounting plate to the opening of the bottom box, the mounting plate is fastened and connected to the network motherboard, the connecting frame is clamped or fastened to the opening of the bottom box or is sleeved at the opening of the bottom box, the cover plate is connected to the connecting frame by pressing, and the cover plate, the connecting frame, and the bottom box are fastened and connected by using screws. The circuit assembly is fixedly mounted in the bottom box by using a fastener, and a jack is disposed at a position that is on the cover plate and that corresponds to the circuit assembly.

Alternatively, the assembly panel includes a mounting plate and a connecting arm that extends from an end of the mounting plate to the opening of the bottom box, and the connecting arm is fastened and connected to the opening of the bottom box. For example, the connecting arm is fastened and connected to the opening of the bottom box by using a fastener, and connection holes are disposed at corresponding positions on the connecting arm and a wall surface of the opening of the bottom box. The fastener passes through the connection holes to fasten and connect the connecting arm and the bottom box. The connecting arm may alternatively be integrally connected to the opening of the bottom box, for example, through integral injection molding or cementing.

The AC/DC power supply conversion module may be fixedly mounted in the bottom box by using a fastener. The second avoidance hole does not need to be disposed on the assembly panel, and an output power line of the AC/DC power supply conversion module passes out of the opening of the bottom box and is electrically connected to the network motherboard.

The AC/DC power supply conversion module may alternatively be fixedly mounted on the back surface of the mounting plate. In this case, a cable routing aperture is disposed on a side plate of the bottom box. An input power line of the AC/DC power supply conversion module is electrically connected to the mains, and the output power line of the AC/DC power supply conversion module passes through the second avoidance hole and is electrically connected to the network motherboard.

The AC/DC power supply conversion module may alternatively be fixedly mounted on the front surface of the mounting plate. The input power line of the AC/DC power supply conversion module passes through the opening of the bottom box and is connected to the mains, and the output power line of the AC/DC power supply conversion module is electrically connected to the network motherboard. There is no need to dispose a cable routing aperture on the bottom box and the second avoidance hole on the mounting plate.

When the network motherboard is mounted inside the bottom box, to avoid interference with the circuit assembly, the network motherboard is disposed parallel to a side plate of the bottom box. The assembly structure is a mounting support, and the mounting support includes a mounting frame for mounting the network motherboard and support legs disposed at four corners of the mounting frame. The network motherboard is fixedly mounted on the mounting frame. The support legs are fixedly mounted with the side plates of the bottom box. The support legs are disposed, so that there is a specific gap between the network motherboard and the side plates of the bottom box, to facilitate heat dissipation of the network motherboard.

The network motherboard is detachably connected to or integrally connected to the mounting frame. For example, the network motherboard is fastened and connected to or clamped to the mounting frame by using a fastener, and the network motherboard may alternatively be cemented to or integrally molded to the mounting frame.

In the descriptions of this specification, the described specific features, structures, materials, or characteristics may be combined in an appropriate manner in any one or more of embodiments or examples.

Finally, it should be noted that the foregoing embodiments are merely intended for describing the technical solutions of this application, but not for limiting this application. Although this invention is described in detail with reference to the foregoing embodiments, persons of ordinary skill in the art should understand that they may still make modifications to the technical solutions described in the foregoing embodiments or make equivalent replacements to some technical features thereof, without departing from the scope of the attached claims.

## Claims

1. A power supply expansion plugboard, comprising a circuit assembly (20), an AC/DC power supply conversion module (30), a network motherboard (90), an assembly structure (40), and a cover plate (60), wherein
the circuit assembly (20) is connected to a power line (301) and is configured to provide a power supply externally;
the AC/DC power supply conversion module (30) is connected to the power line (301) and is configured to provide a direct current power supply for the network motherboard (90);
**characterized in that**
the network motherboard (90) is disposed on one side of the assembly structure (40), and the circuit assembly (20) and the AC/DC power supply conversion module (30) are disposed on the other side of the assembly structure (40);
the assembly structure (40) is configured to assemble the circuit assembly (20) and the AC/DC power supply conversion module (30) inside a bottom box (10) which is a 86-type box, and at least a part of the network motherboard (90) is disposed outside the bottom box (10); and
the cover plate (60) is configured to cover the assembly structure (40), and jacks are disposed at positions that are on the cover plate (60) and that correspond to the circuit assembly (20).

2. The power supply expansion plugboard according to claim 1, wherein the network motherboard (90) is further configured to provide a wired network interface externally, and an opening is disposed at a position that is on the cover plate (60) and that corresponds to the wired network interface.

3. The power supply extension plugboard according to claim 1, wherein the network motherboard (90) comprises a radio frequency module and an internal antenna, and the internal antenna is connected to the radio frequency module; and the network motherboard (90) is configured to provide a wireless network signal externally.

4. The power supply extension plugboard according to claim 1, wherein the network motherboard (90) comprises a radio frequency module and an external antenna, the radio frequency module is connected to the external antenna, and the external antenna is disposed on the cover plate (60); and the network motherboard (90) is configured to provide a wireless network signal externally.

5. The power supply extension plugboard according to any one of claims 2 to 4, wherein the network motherboard (90) further comprises a network configuration interface for configuring a network parameter.

6. The power supply extension plugboard according to any one of claims 2 to 4, wherein the network motherboard (90) further comprises a network control switch configured to enable or disable a network, and a button is disposed at a position that is on the cover plate (60) and that corresponds to the network control switch, and is configured to trigger the network control switch.

7. The power supply expansion plugboard according to any one of claims 2 to 4, wherein the network motherboard (90) uses a power line carrier technology to receive a transmitted network signal and send a network signal through a power line (301).

8. The power supply expansion plugboard according to claim 1, wherein the network motherboard (90) and the cover plate (60) are L-shaped.

9. The power supply expansion plugboard according to claim 1, wherein the assembly structure is an assembly panel (40), the assembly panel (40) comprises a connecting plate (401) at least a part of which covers an opening of the bottom box (10) and a mounting plate (402) extending outside the bottom box (10), the network motherboard (90) is mounted on one side that is of the mounting plate (402) and that faces the cover plate (60), and the circuit assembly (20) and the AC/DC power supply conversion module are mounted on one side that is of the connecting plate (401) and that is away from the cover plate (60).

10. The power supply expansion plugboard according to claim 9, wherein a first avoidance hole and a second avoidance hole are disposed on the connecting plate (401), a network cable (80) is communicatively connected to the network motherboard (90) through the first avoidance hole, and a power line (301) of the AC/DC power supply conversion module is electrically connected to the network motherboard (90) through the second avoidance hole.

11. The power supply extension plugboard according to claim 10, wherein
several extension bodies (403) protruding and extending toward the cover plate (60) are disposed on one side that is of the assembly structure and that faces the cover plate (60), and are configured to wrap the network cable/power line.

12. The power supply extension plugboard according to claim 11, wherein the extension bodies (403) comprise a first extension column and a second extension column that are disposed at intervals, a gap between the first extension column and the second extension column is greater than or equal to a diameter of the network cable/power line, and the network cable/power line passes through the gap between the first extension column and the second extension column.

13. The power supply expansion plugboard according to any one of claims 1 to 12, wherein the cover plate (60) comprises a panel and an upper baffle plate, a lower baffle plate, a left baffle plate, and a right baffle plate that are circumferentially disposed around the panel, and several heat emission holes are disposed on the lower baffle plate and/or the left baffle plate and/or the right baffle plate.

14. A socket, comprising the power supply expansion plugboard and the bottom box (10) according to any one of claims 1 to 13.

## Patentansprüche

1. Stromversorgungserweiterungssteckplatine, umfassend eine Schaltungsanordnung (20), ein AC/DC-Stromversorgungswandlungsmodul (30), eine Netzwerk-Hauptplatine (90), eine Anordnungsstruktur (40) und eine Abdeckplatte (60), wobei
die Schaltungsanordnung (20) an eine Stromleitung (301) angeschlossen und konfiguriert ist, um eine externe Stromversorgung bereitzustellen;
Das AC/DC-Stromversorgungswandlungsmodul (30) ist an die Stromleitung (301) angeschlossen und so konfiguriert, dass es eine Gleichstromversorgung für die Netzwerk-Hauptplatine (90) bereitstellt;
**dadurch gekennzeichnet, dass**
sich die Netzwerk-Hauptplatine (90) auf der einen Seite der Anordnungsstruktur (40) befindet und sich die Schaltungsanordnung (20) und das AC/DC-Stromversorgungswandlungsmodul (30) auf der anderen Seite der Anordnungsstruktur (40) befinden;
die Anordnungsstruktur (40) konfiguriert ist, um die Schaltungsanordnung (20) und das AC/DC-Stromversorgungswandlungsmodul (30) in einem unteren Gehäuse (10) vom Typ 86 anzuordnen, wobei mindestens ein Teil der Netzwerk-Hauptplatine (90) außerhalb des unteren Gehäuses (10) angeordnet ist; und
die Abdeckplatte (60) konfiguriert ist, um die Anordnungsstruktur (40) abzudecken, und Buchsen an Positionen auf der Abdeckplatte (60) angeordnet sind, die der Schaltungsanordnung (20) entsprechen.

2. Stromversorgungserweiterungssteckplatine nach Anspruch 1, wobei die Netzwerk-Hauptplatine (90) ferner konfiguriert ist, um eine externe kabelgebundene Netzwerkschnittstelle bereitzustellen, und an einer Stelle auf der Abdeckplatte (60) eine Öffnung angeordnet ist, die der kabelgebundenen Netzwerkschnittstelle entspricht.

3. Stromversorgungserweiterungssteckplatine nach Anspruch 1, wobei die Netzwerk-Hauptplatine (90) ein Hochfrequenzmodul und eine interne Antenne umfasst und die interne Antenne mit dem Hochfrequenzmodul verbunden ist; und die Netzwerk-Hauptplatine (90) konfiguriert ist, um ein drahtloses Netzwerksignal nach außen bereitzustellen.

4. Stromversorgungserweiterungssteckplatine nach Anspruch 1, wobei die Netzwerk-Hauptplatine (90) ein Hochfrequenzmodul und eine externe Antenne umfasst, das Hochfrequenzmodul mit der externen Antenne verbunden ist und die externe Antenne auf der Abdeckplatte (60) angeordnet ist; und die Netzwerk-Hauptplatine (90) konfiguriert ist, um ein drahtloses Netzwerksignal nach außen bereitzustellen.

5. Stromversorgungserweiterungssteckplatine nach einem der Ansprüche 2 bis 4, wobei die Netzwerk-Hauptplatine (90) ferner eine Netzwerk-Konfigurationsschnittstelle zur Konfiguration eines Netzwerkparameters aufweist.

6. Stromversorgungserweiterungssteckplatine nach einem der Ansprüche 2 bis 4, wobei die Netzwerk-Hauptplatine (90) ferner einen Netzwerk-Steuerschalter umfasst, der zum Aktivieren oder Deaktivieren eines Netzwerks konfiguriert ist, und an einer Stelle auf der Abdeckplatte (60) ein Knopf angeordnet ist, der dem Netzwerk-Steuerschalter entspricht und zum Auslösen des Netzwerk-Steuerschalters konfiguriert ist.

7. Stromversorgungserweiterungssteckplatine nach einem der Ansprüche 2 bis 4, wobei die Netzwerk-Hauptplatine (90) eine Stromleitungsträgertechnologie verwendet, um ein übertragenes Netzwerksignal zu empfangen und ein Netzwerksignal über eine Stromleitung (301) zu senden.

8. Stromversorgungserweiterungssteckplatine nach Anspruch 1, wobei die Netzwerk-Hauptplatine (90) und die Abdeckplatte (60) L-förmig sind.

9. Stromversorgungserweiterungssteckplatine nach Anspruch 1, wobei die Anordnungsstruktur eine Anordnungsplatte (40) ist, wobei die Anordnungsplatte (40) eine Verbindungsplatte (401) umfasst, die zumindest teilweise eine Öffnung des unteren Gehäuses (10) abdeckt, und eine Montageplatte (402), die aus dem unteren Gehäuse (10) herausragt, die Netzwerk-Hauptplatine (90) auf der einen Seite der Montageplatte (402) montiert ist, die der Abdeckplatte (60) zugewandt ist, und die Schaltungsanordnung (20) und das AC/DC-Stromversorgungswandlungsmodul auf der anderen Seite der Verbindungsplatte (401) montiert sind, die der Abdeckplatte (60) abgewandt ist.

10. Stromversorgungserweiterungssteckplatine nach Anspruch 9, wobei auf der Verbindungsplatte (401) eine erste und eine zweite Aussparung angeordnet sind, ein Netzwerkkabel (80) über die erste Aussparung mit der Netzwerk-Hauptplatine (90) kommunikativ verbunden ist und eine Stromleitung (301) des AC/DC-Stromversorgungswandlungsmoduls über die zweite Aussparung elektrisch mit der Netzwerk-Hauptplatine (90) verbunden ist.

11. Stromversorgungserweiterungssteckplatine nach Anspruch 10, wobei mehrere Verlängerungskörper (403), die in Richtung der Abdeckplatte (60) vorstehen und sich erstrecken, auf einer Seite der Anordnungsstruktur angeordnet sind, die der Abdeckplatte (60) zugewandt ist, und dazu konfiguriert sind, um das Netzwerkkabel/die Stromleitung zu umwickeln.

12. Stromversorgungserweiterungssteckplatine nach Anspruch 11, wobei die Verlängerungskörper (403) eine erste Verlängerungssäule und eine zweite Verlängerungssäule umfassen, die in Abständen angeordnet sind, ein Spalt zwischen der ersten Verlängerungssäule und der zweiten Verlängerungssäule größer als oder gleich einem Durchmesser des Netzwerkkabels/der Stromleitung ist und das Netzwerkkabel/die Stromleitung durch den Spalt zwischen der ersten Verlängerungssäule und der zweiten Verlängerungssäule verläuft.

13. Stromversorgungserweiterungssteckplatine nach einem der Ansprüche 1 bis 12, wobei die Abdeckplatte (60) eine Platte und ein oberes Ablenkblech, ein unteres Ablenkblech, ein linkes Ablenkblech und ein rechtes Ablenkblech umfasst, die in Umfangsrichtung um die Platte herum angeordnet sind, und mehrere Wärmeabgabeöffnungen an dem unteren Ablenkblech und/oder dem linken Ablenkblech und/oder dem rechten Ablenkblech angeordnet sind.

14. Buchse, umfassend die Stromversorgungserweiterungssteckplatine und das untere Gehäuse (10) nach einem der Ansprüche 1 bis 13.

## Revendications

1. Carte enfichable d'expansion d'alimentation, comprenant un ensemble de circuits (20), un module de conversion d'alimentation CA/CC (30), une carte mère réseau (90), une structure d'assemblage (40), et une plaque de recouvrement (60),
dans laquelle
l'ensemble de circuit (20) est connecté à une ligne d'alimentation (301) et est configuré pour fournir une alimentation externe ;
le module de conversion d'alimentation CA/CC (30) est connecté à la ligne d'alimentation (301) et est configuré pour fournir une alimentation en courant continu à la carte mère réseau (90) ;
**caractérisée en ce que**
la carte mère réseau (90) est disposée sur un côté de la structure d'assemblage (40), et l'ensemble de circuit (20) et le module de conversion d'alimentation CA/CC (30) sont disposés sur l'autre côté de la structure d'assemblage (40) ;
la structure d'assemblage (40) est configurée pour assembler le circuit imprimé (20) et le module de conversion d'alimentation CA/CC (30) à l'intérieur d'un boîtier inférieur (10) qui est un boîtier de type 86, et au moins une partie de la carte mère réseau (90) est disposée à l'extérieur du boîtier inférieur (10) ; et
la plaque de recouvrement (60) est configurée pour recouvrir la structure d'assemblage (40), et des connecteurs sont disposés à des positions qui sont sur la plaque de recouvrement (60) et qui correspondent à l'ensemble de circuit (20).

2. Carte enfichable d'expansion d'alimentation selon la revendication 1, dans laquelle la carte mère réseau (90) est en outre configurée pour fournir une interface réseau câblée externe, et une ouverture est disposée à une position qui est sur la plaque de recouvrement (60) et qui correspond à l'interface réseau câblée.

3. Carte enfichable d'extension d'alimentation selon la revendication 1, dans laquelle la carte mère réseau (90) comprend un module de radiofréquence et une antenne interne, et l'antenne interne est connectée au module de radiofréquence ; et la carte mère réseau (90) est configurée pour fournir un signal de réseau sans fil externe.

4. Carte enfichable d'extension d'alimentation selon la revendication 1, dans laquelle la carte mère réseau (90) comprend un module de radiofréquence et une antenne externe, le module de radiofréquence est connecté à l'antenne externe, et l'antenne externe est disposée sur la plaque de recouvrement (60) ; et la carte mère réseau (90) est configurée pour fournir un signal réseau sans fil externe.

5. Carte enfichable d'extension d'alimentation selon l'une quelconque des revendications 2 à 4, dans laquelle la carte mère réseau (90) comprend en outre une interface de configuration réseau pour configurer un paramètre réseau.

6. Carte enfichable d'extension d'alimentation selon l'une quelconque des revendications 2 à 4, dans laquelle la carte mère réseau (90) comprend en outre un commutateur de commande réseau configuré pour activer ou désactiver un réseau, et un bouton est disposé à une position qui est sur la plaque de recouvrement (60) et qui correspond au commutateur de commande réseau, et est configuré pour déclencher le commutateur de commande réseau.

7. Carte enfichable d'expansion d'alimentation selon l'une quelconque des revendications 2 à 4, dans laquelle la carte mère réseau (90) utilise une technologie de porteuse de ligne électrique pour recevoir un signal réseau transmis et envoyer un signal réseau via une ligne électrique (301).

8. Carte enfichable d'expansion d'alimentation selon la revendication 1, dans laquelle la carte mère réseau (90) et la plaque de recouvrement (60) sont en forme de L.

9. Carte enfichable d'expansion d'alimentation selon la revendication 1, dans laquelle la structure d'assemblage est un panneau d'assemblage (40), le panneau d'assemblage (40) comprend une plaque de connexion (401) dont au moins une partie couvre une ouverture du boîtier inférieur (10) et une plaque de montage (402) s'étendant à l'extérieur du boîtier inférieur (10), la carte mère réseau (90) est montée sur un côté qui est de la plaque de montage (402) et qui fait face à la plaque de recouvrement (60), et l'ensemble de circuit (20) et le module de conversion d'alimentation CA/CC sont montés sur un côté qui est de la plaque de connexion (401) et qui est éloigné de la plaque de recouvrement (60).

10. Carte enfichable d'expansion d'alimentation selon la revendication 9, dans laquelle un premier trou d'évitement et un second trou d'évitement sont disposés sur la plaque de connexion (401), un câble réseau (80) est connecté de manière communicative à la carte mère réseau (90) à travers le premier trou d'évitement, et une ligne d'alimentation (301) du module de conversion d'alimentation CA/CC est connectée électriquement à la carte mère réseau (90) à travers le second trou d'évitement.

11. Carte enfichable d'extension d'alimentation selon la revendication 10, dans laquelle plusieurs corps d'extension (403) faisant saillie et s'étendant vers la plaque de recouvrement (60) sont disposés sur un côté qui est de la structure d'assemblage et qui fait face à la plaque de recouvrement (60), et sont configurés pour enrouler le câble réseau/la ligne d'alimentation.

12. Carte enfichable d'extension d'alimentation selon la revendication 11, dans laquelle les corps d'extension (403) comprennent une première colonne d'extension et une deuxième colonne d'extension qui sont disposées à intervalles réguliers, un espace entre la première colonne d'extension et la seconde colonne d'extension est supérieur ou égal à un diamètre du câble réseau/de la ligne électrique, et le câble réseau/la ligne électrique passe à travers l'espace entre la première colonne d'extension et la seconde colonne d'extension.

13. Carte enfichable d'expansion d'alimentation selon l'une quelconque des revendications 1 à 12, dans lequel la plaque de recouvrement (60) comprend un panneau et une plaque de déflecteur supérieure, une plaque de déflecteur inférieure, une plaque de déflecteur gauche, et une plaque de déflecteur droite qui sont disposées circonférentiellement autour du panneau, et plusieurs trous d'émission de chaleur sont disposés sur la plaque de déflecteur inférieure et/ou la plaque de déflecteur gauche et/ou la plaque de déflecteur droite.

14. Prise, comprenant la carte enfichable d'expansion d'alimentation et le boîtier inférieur (10) selon l'une quelconque des revendications 1 à 13.
